# EUROPEAN PATENT SPECIFICATION

(11) **EP 2 947 992 B1**
(45) Date of publication and mention of the grant of the patent: **29.08.2018**
(21) Application number: 14703432.6
(22) Date of filing: 15.01.2014
(51) Int. Cl.: A21C 7/02, A01K 97/04

(54) **MACHINE FOR THE MANUFACTURE OF BOILIES FOR SPORT FISHING, PARTICULARLY CARP-FISHING**
MASCHINE ZUR HERSTELLUNG VON BOILIES FÜR SPORTANGELN, INSBESONDERE KARPFENFISCHEN
MACHINE PERMETTANT DE FABRIQUER DES BOUILLETTES DESTINÉES À LA PÊCHE SPORTIVE, ET PLUS PARTICULIÈREMENT À LA PÊCHE À LA CARPE

(30) Priority: 28.01.2013 IT MO20130018
(43) Date of publication of application: 02.12.2015
(73) Proprietor: ROLLYCARP S.N.C. DI OLIVA MARCO E C., 41032 Cavezzo (MO) (IT)
(72) Inventor: OLIVA, Marco, 41032 Cavezzo (MO) (IT)
(74) Representative: Brunacci, Marco
(86) International application number: PCT/IB2014/058295
(87) International publication number: WO 2014/115063

(56) References cited:
- DE-A1- 2 744 756
- DE-A1-102004 059 263
- GB-A- 378 231
- NL-A- 9 001 880
- NL-C- 1 036 524

## Description

### Technical Field

The present invention relates to a machine for the manufacture of boilies for sport fishing, particularly carp-fishing.

### Background Art

It is known that boilies are a particular type of bait used for some types of sport fishing, such as fishing for carp and other large cyprinidae with the same feeding habits.

Boilies consist of various types of meals, mixed with egg and shaped into small balls which are finally boiled and/or steam cooked.

The spherical shape can be achieved, for example, by shaping the mix in the form of an extruded loaf which is then worked by a machine conventionally known as a "boilies machine".

Different types of boilies machine are available on the market at present.

One of these consists of a pair of counter-rotating horizontal rollers, placed side by side and having a series of annular grooves.

The loaf of mix is introduced between the two rollers, making it pass through the annular grooves, which are shaped so as to cut the loaf and give the mix the desired spherical shape.

This particular type of boilies machine is not without drawbacks.

In this respect, it is underlined that the spherical shape of the boilies obtained using this machine is not always perfect.

Furthermore, in the event of mixes of particularly hard and compact meals being used, the rollers are unable to cut the extruded loaf and are completely ineffective.

To overcome such drawbacks, at least in part, a different type of boilies machine is known having just one rotating roller which cooperates with a grooved fixed body.

In this case, the machine is usually able to ensure a better spherical shape is made and compact the mix better during production, including in the case of mixes of particularly hard and compact meals.

Despite this, this type of machine also has a number of drawbacks, including a particularly high cost.

In this respect, it is underlined that the grooved fixed body and roller are made all in one piece starting from a corresponding block of plastic, aluminium, steel or other material.

The block is machined for shavings removal to cut into the surfaces of the roller and the fixed body so as to obtain the necessary grooves.

The total cost of manufacture, especially of shaving removal machining operations, is very high and inevitably affects the retail price of the machine, with the risk of making it less attractive for customers,

A machine according to the preamble of claim 1 is disclosed in NL9001880.

### Description of the Invention

The main aim of the present invention is to provide a machine for the manufacture of boilies for sport fishing, particularly carp-fishing, which is practical, easy and functional to use, also allows working very hard and compact meal mixes, is able to achieve a high degree of spherical shape of the boilies, and, at the same time, has a particularly low production cost and sales price.

Another object of the present invention is to provide a machine for the manufacture of boilies for sport fishing, particularly carp-fishing, which allows to overcome the mentioned drawbacks of the state of the art within the ambit of a simple, rational, easy and effective to use solution.

The above objects are achieved by the present machine for the manufacture of boilies for sport fishing, particularly carp-fishing, having the features cited in claim 1.

### Brief Description of the Drawings

Other characteristics and advantages of the present invention will become more evident from the description of a preferred, but not sole, embodiment of a machine for the manufacture of boilies for sport fishing, particularly carp-fishing, illustrated purely as an example but not limited to the annexed drawings in which:

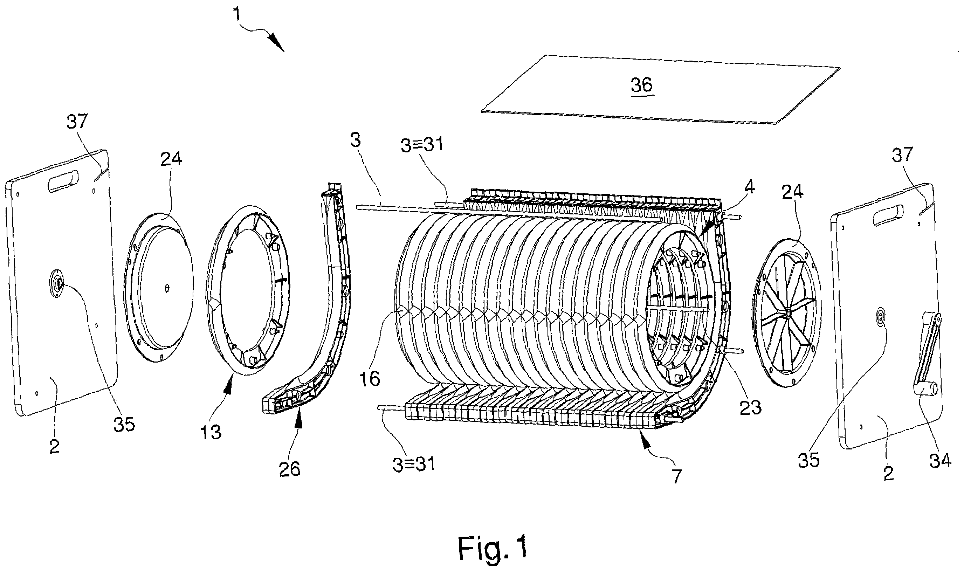

Figure 1 is an exploded view of the machine according to the invention;

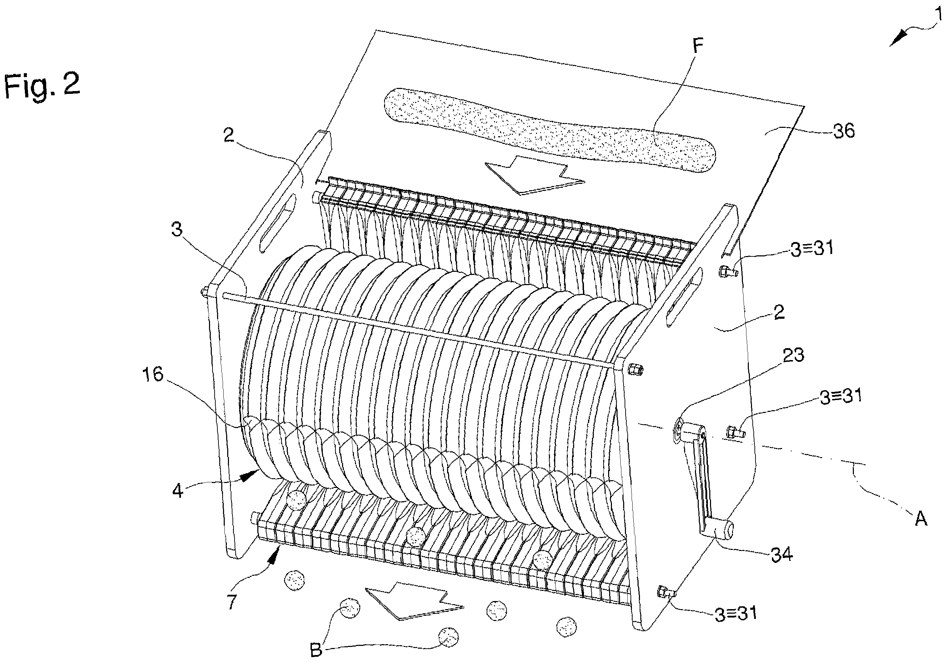

Figure 2 is an axonometric view of the machine according to the invention;

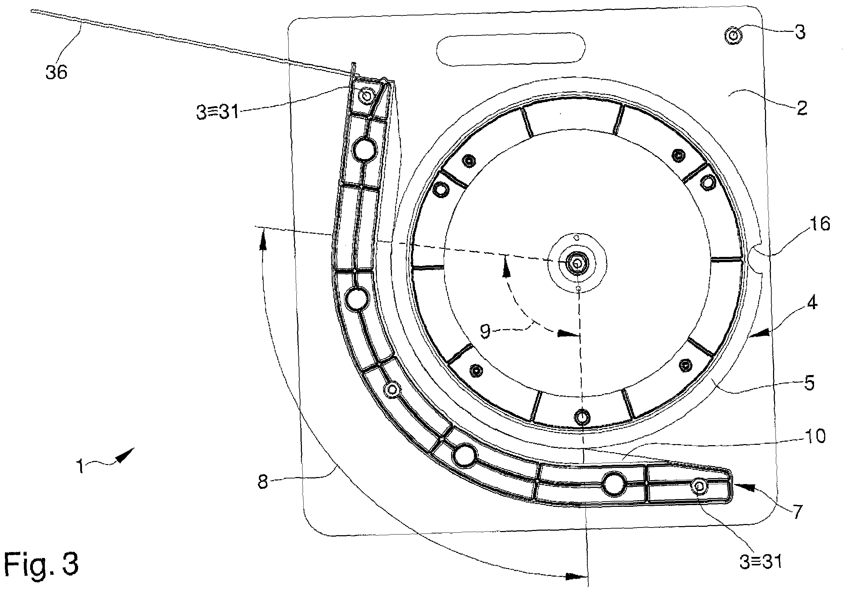

Figure 3 is a cross section view of the machine according to the invention;

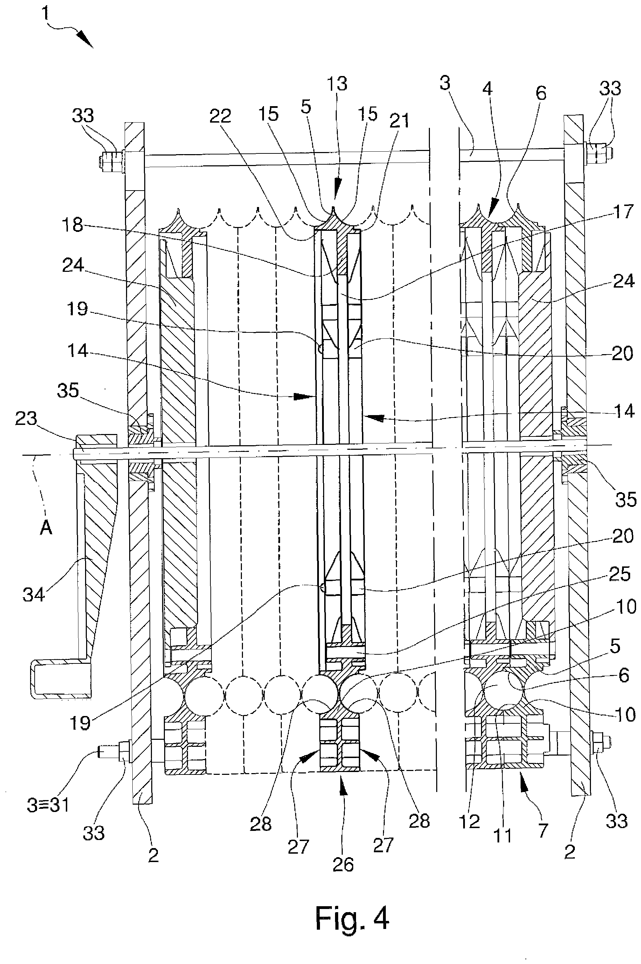

Figure 4 is a longitudinal section view of the machine according to the invention;

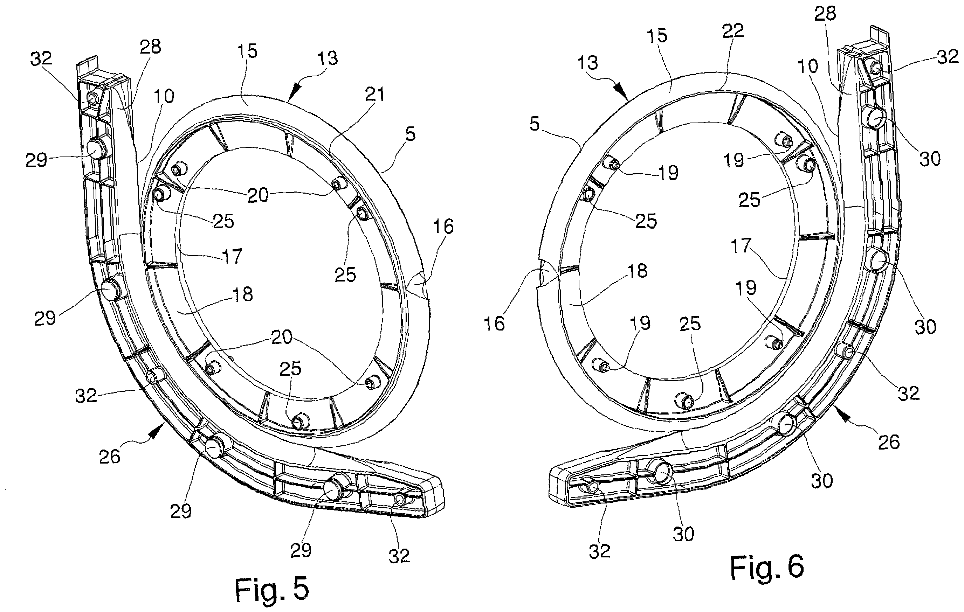

Figure 5 is an axonometric view of a detail of the machine according to the invention;
Figure 6 is an axonometric view, from another angle, of the detail in figure 5.

### Embodiments of the Invention

With particular reference to such figures, globally indicated by 1 is a machine for the manufacture of boilies for sport fishing, particularly carp-fishing.

The machine 1 is used to cut a loaf F of mix and shape it in the form of substantially spherical boilies B to be used as fishing bait.

The machine 1 comprises:
- a base frame 2, 3;
- a forming roller 4 which has a central axis A substantially horizontal and which is associated with the base frame 2, 3 in a rotatable way around the central axis A. The forming roller 4 comprises a plurality of first annular reliefs 5 spaced out by a plurality of first annular grooves 6;
- a forming body 7 which is statically associated with the base frame 2, 3 and which comprises at least a partially cylindrical active portion 8 substantially tangent to the forming roller 4 in correspondence to a circular sector 9 of the forming roller 4. The forming body 7 comprises a plurality of second reliefs 10 which substantially match the first reliefs 5 and are spaced out by a plurality of second grooves 11 cooperating with the first grooves 6 to define a plurality of ducts 12 with substantially circular section to form the boilies B;
Both the forming roller 4 and the forming body 7 are made with modular components.

More in detail, the forming roller 4 comprises a plurality of first modular components 13, i.e., a series of elements identical with each other and associable in a repetitive way in an assembly configuration wherein they define the forming roller 4.

In the assembly configuration, the first modular components 13 are axially coupled to one another.

In other words, each first modular component 13 comprises two first attachment faces 14 which are substantially opposite one another and which, once the forming roller 4 has been assembled, are substantially transversal to the central axis A.

The first attachment faces 14 of a first modular component 13 can be coupled facing to the first attachment faces 14 of the adjacent first modular components 13.

This way, the axial length of the forming roller 4 is defined by the number of first modular components 13 of which it is made.

Each first modular component 13 comprises the complete totality of at least one between the first reliefs 5 and the first grooves 6.

In the embodiment shown in the illustrations, each first modular component 13 comprises:
- the complete totality of just one first relief 5; and
- two first shaped sides 15 which cooperate with the first shaped sides 15 of
   the adjacent first modular components 13 to define the first grooves 6.

Alternative embodiments cannot however be ruled out wherein each first modular component 13 comprises just one first groove 6 obtained between two side rises, wherein each rise cooperates with an adjacent rise to define a first relief 5.

Other embodiments are also possible wherein each first modular component 13 comprises two or more first reliefs 5, two or more first grooves 6, or similar combinations.

The solution shown in the illustrations however, has the advantage of not having any undercut and of being conventionally made by moulding (e.g., plastic injection moulding) inside a mould with just two shells and without any inner core.

The first modular components 13 comprise a recess 16 obtained on each of the first reliefs 5.

In the assembly configuration, wherein the first modular components 13 are associated with one another, the recesses 16 are aligned along a direction parallel to the central axis A.

The succession of recesses 16 defines a longitudinal groove on the forming roller 4 which ensures the easier release of the boilies B and their exit from the machine 1.

The first modular components 13 are ring-shaped and have a large opening 17 at the center.

In particular, each first modular component 13 has an outer portion defined by the first relief 5 and by the first shaped sides 15, and an inner portion defined by a small circle 18 housed inside the outer portion and on which the opening 17 is located.

The opposite surfaces of the small circle 18 define the first attachment faces 14. The first attachment faces 14 comprise at least a first male element 19 and/or at least a first female element 20 which can be coupled to a first female element 20 and/or a first male element 19 respectively, of the adjacent first modular components 13.

Usefully, each first modular component 13 comprises a plurality of first male elements 19 and of first female elements 20.

The first male elements 19 and the first female elements 20 ensure the reciprocal centring of the first modular components 13 and their anti-rotational coupling, i.e., such as to prevent the relative rotation of a first modular component 13 with respect to the other around the central axis A.

To the centring of the first modular components 13 also contributes the conformation of the annular edges 21, 22 of the same first modular components 13.

Each first modular component 13 does in fact comprise a first annular edge 21 and a second annular edge 22 opposite one another, wherein the first annular edge 21 has an outer diameter substantially the same as the inner diameter of the second annular edge 22.

In the assembly configuration, the first annular edge 21 of a first modular component 13 fits substantially to measure in the second annular edge 22 of an adjacent first modular component 13.

The axial stop of the first modular components 13, i.e., the stop which prevents the reciprocal moving away in a direction parallel to the central axis A, is obtained thanks to at least a first retention rod 23.

The first retention rod 23 extends substantially parallel to the central axis A and permits the axial holding of the first modular components 13.

In this respect, it is underlined that at the two axial extremities of the forming roller 4 are arranged at least two supporting discs 24 associated with the first retention rod 23.

In the embodiment shown in the illustrations, the first retention rod 23 is one only and is coaxial to the central axis A.

Alternative embodiments cannot however be ruled out wherein several first retention rods 23 are envisaged in out-of-axis position with respect to the central axis A.

For this purpose, the first modular components 13 have first holes 25 which cross the small circle 18 and which, in assembly configuration, are all aligned with each other to allow crossing by means of the first retention rods 23.

The forming body 7 comprises a plurality of second modular components 26 which, similarly to the first modular components 13, are identical with one another and are associated in a repetitive way.

In the assembly configuration of the forming body 7, the second modular components 26 are axially coupled the one to the other.

In other words, each second modular component 26 comprises two second attachment faces 27 which are substantially opposite each other and which, once the forming body 7 has been assembled, are substantially transversal to the central axis A.

The second attachment faces 27 of a second modular component 26 can be coupled to the second attachment faces 27 of the adjacent second modular components 26.

This way, the axial length of the forming body 7 is defined by the number of second modular components 26 of which it composed.

Each second modular component 26 comprises the complete totality of at least one between the second reliefs 10 and the second grooves 11.

In the embodiment shown in the illustrations, each second modular component 26 comprises:
- the complete totality of just one second relief 10; and
- two second shaped sides 28 which cooperate with the second shaped sides 28 of the adjacent second modular components 26 to define the second grooves 11.

Alternative embodiments cannot however be ruled out wherein each second modular component 26 comprises only one second groove 11 obtained between two side rises, wherein each rise cooperates with an adjacent rise to define a second relief 10.

Other embodiments are also possible wherein each second modular component 26 comprise two or more second reliefs 10, two or more second grooves 11, or similar combinations.

Similarly to what has been stated for the first modular components 13, however, the embodiment of the second modular components 26 shown in the illustrations has the advantage of not having any undercut and of being conventionally made by moulding (e.g., plastic injection moulding) inside a mould with just two shells and without any inner core.

The second attachment faces 27 comprise at least a second male element 29 and/or at least a second female element 30 which can be coupled to a second female element 30 and/or a second male element 29 respectively, of the adjacent second modular components 26.

Usefully, each second modular component 26 comprises a plurality of second male elements 29 and of second female elements 30.

The second male elements 29 and the second female elements 30 ensure the reciprocal centring of the second modular components 26.

The axial stop of the second modular components 26, on the other hand, is obtained thanks to at least a second retention rod 31.

In the embodiment shown in the illustrations, the second retention rods 31 are more than one, extend substantially parallel to the central axis A and permit the axial holding of the second modular components 26.

For this purpose, the second modular components 26 are crossed from one side to another by second holes 32 which, in assembly configuration, are all aligned with one another to permit the crossing of the second retention rods 31.

The second retention rods 31, furthermore, permit joining the forming body 7 to the base frame 2, 3.

The base frame 2, 3, in fact, comprises at least two side plates 2 arranged at the axial extremities of the forming body 7.

The side plates 2 are substantially vertical and at right angles to the central axis A.

Furthermore, the side plates 2 are associated with one another by means of a plurality of connection rods 3 which extend parallel to the central axis A.

At least one of the connection rods 3 coincides with the second retention rods 31.

The second retention rods 31, in fact, not only cross all the second modular components 26 but also the side plates 2, to which they are fastened by means of connection means 33, such as threaded nuts or the like; this way the retention rods 31 also act as connection rods 3.

On the side plates 2, furthermore, the first retention rod 23 of the forming roller 4 is fitted rotatable.

The extremities of the first retention rod 23, in fact, engage in specific revolving seats 35 obtained on the side plates 2.

One of the extremities of the first retention rod 23 protrudes beyond the relative side plate 2 and is associated with means of operation in rotation 34.

In the embodiment shown in the illustrations, the means of operation in rotation 34 are of the manual type and consist, e.g., of a crank keyed on the first retention rod 23.

The rotation of the crank 34 drives in rotation the supporting discs 24 keyed to it and all the first modular components 13 retained between the supporting discs 24.

Alternative embodiments are however possible wherein the means of operation in rotation 34 are of the automated type and are made up, e.g., of an electric motor of any type.

At the top of the side plates 2 is associated a resting body 36 on which the loaf F can be rested before being introduced between the forming roller 4 and the forming body 7.

The resting body 36 is defined by a tilted plane insertable in two open slots 37 obtained on the side plates 2.

It has in fact been ascertained how the described invention achieves the proposed objects.

The particular solution of using modular components according to the invention in fact allows considerably simplifying the fabrication process of the forming roller and of the forming body, because laborious and costly jobs are avoided to remove the shavings from solid, as occurs with traditional machines.

It is therefore easy to appreciate that the sales price of the machine according to the invention is conveniently lower (about one third of that of known machines). To this, the fact must be added that in the case of traditional machines, each roller is inconveniently meant to be used only on a specific machine model depending on its length.

In the machine according to the invention, instead, the length of the forming roller and of the forming body depends on the number of modular components, which can therefore be used in a practical, easy and functional way to make machine models of different length.

## Claims

1. Machine (1) for the manufacture of boilies for sport fishing, particularly carp-fishing, comprising:
- a base frame (2, 3);
- a forming roller (4) which has a central axis (A) substantially horizontal and which is associated with said base frame (2, 3) in a rotatable way around said central axis (A), said forming roller (4) comprising a plurality of first annular reliefs (5) spaced out by a plurality of first annular grooves (6);
- a forming body (7) which is statically associated with said base frame (2, 3) and which comprises at least a partially cylindrical active portion (8) substantially tangent to said forming roller (4) in correspondence to a circular sector (9) of said forming roller (4), said forming body (7) comprising a plurality of second reliefs (10) which are substantially matching with said first reliefs (5) and are spaced out by a plurality of second grooves (11) cooperating with said first grooves (6) to define a plurality of ducts (12) with substantially circular section for forming substantially spherical boilies (B) for sport fishing;
wherein:
- said forming roller (4) comprises a plurality of first modular components (13) coupled axially together, each first modular component (13) comprising the complete totality of at least one between said first reliefs (5) and said first grooves (6) of said forming roller (4); and
- said forming body (7) comprises a plurality of second modular components (26) which can be coupled axially together, each second modular component (26) comprising the complete totality of at least one between said second reliefs (10) and said second grooves (11) of said forming body (7); wherein:
- said forming roller (4) comprises at least a first retention rod (23) which extends substantially parallel to said central axis (A) for the axial holding of said first modular components (13) of said forming roller (4);
- said forming body (7) comprises at least a second retention rod (31) which extends substantially parallel to said central axis (A) for the axial retention of said second modular components (26) of said forming body (7);
- said base frame (2, 3) comprises at least two side plates (2) arranged at the axial extremities of said forming body (7) and **characterised in that**
- said side plates (2) are associated with a plurality of connection rods (3) extending between them, and
- at least one of said connection rods (3) coincides with said second retention rod (31).

2. Machine (1) according to the claim 1, **characterized by** the fact that each of said first modular components (13) comprises:
- the complete totality of just one of said first reliefs (5); and
- two first shaped sides (15) which cooperate with the first shaped sides (15) of the adjacent first modular components (13) to define said first grooves (6).

3. Machine (1) according to one or more the preceding claims, **characterized by** the fact that each of said first modular components (13) comprises two first attachment faces (14) substantially transversal to said central axis (A) and opposite to one another, the first attachment faces (14) of a first modular component (13) can be coupled to the first attachment faces (14) of the adjacent first modular components (13).

4. Machine (1) according to the claim 3, **characterized by** the fact that said first attachment faces (14) comprise at least a first male element (19) and at least a first female element (20) which can be coupled to a first female element (20) and a first male element (19) respectively, of the adjacent first modular components (13).

5. Machine (1) according to one or more the preceding claims, **characterized by** the fact that said first modular components (13) are ring-shaped.

6. Machine (1) according to one or more the preceding claims, **characterized by** the fact that said forming roller (4) comprises at least two supporting discs (24) arranged at the axial extremities of said forming roller (4) and associated with said first retention rod (23).

7. Machine (1) according to one or more the preceding claims, **characterized by** the fact that said first modular components (13) comprise a recess (16) obtained on each of said first reliefs (5) and said first modular components (13) are associable with one another in an assembly configuration of said forming roller (4) wherein said recesses (16) are aligned along a direction parallel to said central axis (A).

8. Machine (1) according to one or more the preceding claims, **characterized by** the fact that each of said second modular components (26) comprises:
- the complete totality of just one of said second reliefs (10); and
- two second shaped sides (28) which cooperate with the second shaped sides (28) of the adjacent second modular components (26) to define said second grooves (11).

9. Machine (1) according to one or more the preceding claims, **characterized by** the fact that each of said second modular components (26) comprises two second attachment faces (27) substantially transversal to said central axis (A) and opposite to one another, the second attachment faces (27) of a second modular component (26) can be coupled to the second attachment faces (27) of the adjacent second modular components (26).

10. Machine (1) according to the claim 9, **characterized by** the fact that said second attachment faces (27) comprise at least a second male element (29) and at least a second female element (30) which can be coupled to a second female element (30) and a second male element (29) respectively of the adjacent second modular components (26).

11. Machine (1) according to one or more the preceding claims, **characterized by** the fact that said first retention rod (23) is coaxial to said central axis (A) and mounted in a rotatable way on said side plates (2).

## Patentansprüche

1. Maschine (1) für die Herstellung von Boilies zum Sportfischen, insbesondere zum Karpfenfischen, umfassend:
- einen Grundrahmen (2, 3);
- eine Formrolle (4), die eine Mittelachse (A) aufweist, die im Wesentlichen horizontal verläuft, und die mit dem Grundrahmen (2, 3) in einer um die Mittelachse (A) drehbaren Weise verbunden ist, wobei die Formrolle (4) mehrere erste ringförmige Reliefs (5) aufweist, die durch mehrere erste ringförmige Rillen (6) voneinander getrennt sind;
- einen Formkörper (7), der statisch mit dem Grundrahmen (2, 3) verbunden ist und der mindestens einen teilweise zylindrischen aktiven Teil (8) umfasst, der die Formrolle (4) im Wesentlichen einem Kreissektor (9) der Formrolle (4) entsprechend berührt, wobei der Formkörper (7) mehrere zweite Reliefs (10) umfasst, die im Wesentlichen zu den ersten Reliefs (5) passen und die durch mehrere zweite Rillen (11) voneinander getrennt sind, die mit den ersten Rillen (6) zusammenwirken, um mehrere Kanäle (12) mit einem im Wesentlichen runden Querschnitt zu definieren, um im Wesentlichen sphärische Boilies (B) zum Sportfischen zu bilden;
wobei:
- die Formrolle (4) mehrere erste modulare Bauteile (13) umfasst, die axial miteinander verbunden sind, wobei jedes erste modulare Bauteil (13) die vollständige Gesamtheit von mindestens einem der ersten Reliefs (5) und der ersten Rillen (6) der Formrolle (4) umfasst; und
- der Formkörper (7) mehrere zweite modulare Bauteile (26) umfasst, die axial miteinander verbunden werden können, wobei jedes zweite modulare Bauteil (26) die vollständige Gesamtheit von mindestens einem der zweiten Reliefs (10) und der zweiten Rillen (11) des Formkörpers (7) umfasst;
wobei:
- die Formrolle (4) mindestens eine erste Haltestange (23) umfasst, die sich im Wesentlichen parallel zu der Mittelachse (A) erstreckt, um axial die ersten modularen Bauteile (13) der Formrolle aufzunehmen (4);
- der Formkörper (7) mindestens eine zweite Haltestange (31) umfasst, die sich im Wesentlichen parallel zu der Mittelachse (A) erstreckt, um axial die zweiten modularen Bauteile (26) des Formkörpers zu halten (7);
- der Grundrahmen (2, 3) mindestens zwei Seitenplatten (2) umfasst, die an den axialen Extremitäten des Formkörpers (7) angeordnet und **dadurch gekennzeichnet sind, dass**
- die Seitenplatten (2) mit mehreren Verbindungsstangen (3) verbunden sind, die sich zwischen ihnen erstrecken, und
- mindestens eine der Verbindungsstangen (3) der zweiten Verbindungsstange (31) entspricht.

2. Maschine (1) nach Anspruch 1, **gekennzeichnet durch** die Tatsache, dass jedes der ersten modularen Bauteile (13) umfasst:
- die vollständige Gesamtheit von nur einem der ersten Reliefs (5); und
- zwei erste geformte Seiten (15), die mit den ersten geformten Seiten (15) der angrenzenden ersten modularen Bauteile (13) zusammenwirken, um die ersten Rillen (6) zu definieren.

3. Maschine (1) nach einem oder mehreren der vorhergehenden Ansprüche, **gekennzeichnet durch** die Tatsache, dass jedes der ersten modularen Bauteile (13) zwei erste Befestigungsflächen (14) umfasst, die im Wesentlichen quer zu der Mittelachse (A) angeordnet sind und sich gegenüberstehen, wobei die ersten Befestigungsflächen (14) eines ersten modularen Bauteils (13) mit den ersten Befestigungsflächen (14) der angrenzenden ersten modularen Bauteile (13) verbunden werden können.

4. Maschine (1) nach Anspruch 3, **gekennzeichnet durch** die Tatsache, dass die ersten Befestigungsflächen (14) mindestens ein erstes männliches Element (19) und mindestens ein erstes weibliches Element (20) umfassen, die mit einem ersten weiblichen Element (20) bzw. einem ersten männlichen Element (19) der angrenzenden ersten modularen Bauteile (13) verbunden werden können.

5. Maschine (1) nach einem oder mehreren der vorhergehenden Ansprüche, **gekennzeichnet durch** die Tatsache, dass die ersten modularen Bauteile (13) ringförmig sind.

6. Maschine (1) nach einem oder mehreren der vorhergehenden Ansprüchen, **gekennzeichnet durch** die Tatsache, dass die Formrolle (4) mindestens zwei Trägerscheiben (24) umfasst, die an den axialen Extremitäten der Formrolle (4) angeordnet und mit der ersten Haltestange (23) verbunden sind.

7. Maschine (1) nach einem oder mehreren der vorhergehenden Ansprüche, **gekennzeichnet durch** die Tatsache, dass die ersten modularen Bauteile (13) eine Aussparung (16) umfassen, die an jedem der ersten Reliefs (5) erreicht wird, und die ersten modularen Bauteile (13) in einer Baugruppenkonfiguration der Formrolle (4) miteinander verbunden werden können, wobei die Aussparungen (16) entlang einer Richtung ausgerichtet sind, die parallel zu der Mittelachse (A) verläuft.

8. Maschine (1) nach einem oder mehreren der vorhergehenden Ansprüche, **gekennzeichnet durch** die Tatsache, dass jedes der zweiten modularen Bauteile (26) umfasst:
- die vollständige Gesamtheit von nur einem der zweiten Reliefs (10); und
- zwei zweite geformte Seiten (28), die mit den zweiten geformten Seiten (28) der angrenzenden zweiten modularen Bauteile (26) zusammenwirken, um die zweiten Rillen (11) zu definieren.

9. Maschine (1) nach einem oder mehreren der vorhergehenden Ansprüche, **gekennzeichnet durch** die Tatsache, dass jedes der zweiten modularen Bauteile (26) zwei zweite Befestigungsflächen (27) umfasst, die im Wesentlichen quer zu der Mittelachse (A) angeordnet sind und sich gegenüberstehen, wobei die zweiten Befestigungsflächen (27) eines zweiten modularen Bauteils (26) mit den zweiten Befestigungsflächen (27) der angrenzenden zweiten modularen Bauteile (26) verbunden werden können.

10. Maschine (1) nach Anspruch 9, **gekennzeichnet durch** die Tatsache, dass die zweiten Befestigungsflächen (27) mindestens ein zweites männliches Element (29) und mindestens ein zweites weibliches Element (30) umfassen, das mit einem zweiten weiblichen Element (30) bzw. einem zweiten männlichen Element (29) der angrenzenden zweiten modularen Bauteile (26) verbunden werden können.

11. Maschine (1) nach einem oder mehreren der vorhergehenden Ansprüche, **gekennzeichnet durch** die Tatsache, dass die erste Haltestange (23) koaxial zu der Mittelachse (A) steht und in drehbarer Weise an den Seitenplatten (2) montiert ist.

## Revendications

1. Machine (1) pour la fabrication de bouillettes pour la pêche de loisir, notamment la pêche à la carpe, comprenant :
- un châssis de base (2, 3) ;
- un rouleau de formation (4) qui présente un axe central (A) sensiblement horizontal et qui est associé audit châssis de base (2, 3) de manière rotative autour dudit axe central (A), ledit rouleau de formation (4) comprenant une pluralité de premiers reliefs annulaires (5) espacés par une pluralité de premières gorges annulaires (6) ;
- un corps de formation (7) qui est associé statiquement audit châssis de base (2, 3) et qui comprend au moins une portion active partiellement cylindrique (8) sensiblement tangente audit rouleau de formation (4) en correspondance avec un secteur circulaire (9) dudit rouleau de formation (4), ledit corps de formation (7) comprenant une pluralité de seconds reliefs (10) qui concordent sensiblement avec lesdits premiers reliefs (5) et sont espacés par une pluralité de secondes gorges (11) coopérant avec lesdites premières gorges (6) pour définir une pluralité de conduits (12) de section sensiblement circulaire pour former des bouillettes sensiblement sphériques (B) pour la pêche de loisir ;
dans laquelle :
- ledit rouleau de formation (4) comprend une pluralité de premiers composants modulaires (13) couplés axialement ensemble, chaque premier composant modulaire (13) comprenant la totalité complète d'au moins un entre lesdits premiers reliefs (5) et lesdites premières gorges (6) dudit rouleau de formation (4) ; et
- ledit corps de formation (7) comprend une pluralité de seconds composants modulaires (26) qui peuvent être couplés axialement ensemble, chaque second composant modulaire (26) comprenant la totalité complète d'au moins un entre lesdits seconds reliefs (10) et lesdites secondes gorges (11) dudit corps de formation (7) ;
dans laquelle :
- ledit rouleau de formation (4) comprend au moins une première tige de rétention (23) qui s'étend sensiblement parallèle audit axe central (A) pour le maintien axial desdits premiers composants modulaires (13) dudit rouleau de formation (4) ;
- ledit corps de formation (7) comprend au moins une seconde tige de rétention (31) qui s'étend sensiblement parallèle audit axe central (A) pour la rétention axiale desdits seconds composants modulaires (26) dudit corps de formation (7) ;
- ledit châssis de base (2, 3) comprend au moins deux plaques de côté (2) agencées au niveau des extrémités axiales dudit corps de formation (7) et **caractérisée en ce que**
- lesdites plaques de côté (2) sont associées à une pluralité de tiges de raccordement (3) s'étendant entre elles, et
- au moins une desdites tiges de raccordement (3) coïncide avec ladite seconde tige de rétention (31).

2. Machine (1) selon la revendication 1, **caractérisée par le fait que** chacun desdits premiers composants modulaires (13) comprend :
- la totalité complète de seulement un desdits premiers reliefs (5) ; et
- deux premiers côtés profilés (15) qui coopèrent avec les premiers côtés profilés (15) des premiers composants modulaires (13) adjacents pour définir lesdites premières gorges (6).

3. Machine (1) selon une ou plusieurs des revendications précédentes, **caractérisée par le fait que** chacun desdits premiers composants modulaires (13) comprend deux premières faces de fixation (14) sensiblement transversales audit axe central (A) et opposées l'une à l'autre, les premières faces de fixation (14) d'un premier composant modulaire (13) peuvent être couplées aux premières faces de fixation (14) des premiers composants modulaires (13) adjacents.

4. Machine (1) selon la revendication 3, **caractérisée par le fait que** lesdites premières faces de fixation (14) comprennent au moins un premier élément mâle (19) et au moins un premier élément femelle (20) qui peuvent être couplés à un premier élément femelle (20) et un premier élément mâle (19) respectivement, des premiers composants modulaires (13) adjacents.

5. Machine (1) selon une ou plusieurs des revendications précédentes, **caractérisée par le fait que** lesdits premiers composants modulaires (13) sont en forme d'anneau.

6. Machine (1) selon une ou plusieurs des revendications précédentes, **caractérisée par le fait que** ledit rouleau de formation (4) comprend au moins deux disques de support (24) agencés au niveau des extrémités axiales dudit rouleau de formation (4) et associés à ladite première tige de rétention (23).

7. Machine (1) selon une ou plusieurs des revendications précédentes, **caractérisée par le fait que** lesdits premiers composants modulaires (13) comprennent un évidement (16) obtenu sur chacun desdits premiers reliefs (5) et lesdits premiers composants modulaires (13) sont associables les uns avec les autres dans une configuration d'assemblage dudit rouleau de formation (4), dans laquelle lesdits évidements (16) sont alignés le long d'une direction parallèle audit axe central (A).

8. Machine (1) selon une ou plusieurs des revendications précédentes, **caractérisée par le fait que** chacun desdits seconds composants modulaires (26) comprend :
- la totalité complète de seulement un desdits seconds reliefs (10) ; et
- deux seconds côtés profilés (28) qui coopèrent avec les seconds côtés profilés (28) des seconds composants modulaires (26) adjacents pour définir lesdites secondes gorges (11).

9. Machine (1) selon une ou plusieurs des revendications précédentes, **caractérisée par le fait que** chacun desdits seconds composants modulaires (26) comprend deux secondes faces de fixation (27) sensiblement transversales audit axe central (A) et opposées l'une à l'autre, les secondes faces de fixation (27) d'un second composant modulaire (26) peuvent être couplées aux secondes faces de fixation (27) des seconds composants modulaires (26) adjacents.

10. Machine (1) selon la revendication 9, **caractérisée par le fait que** lesdites secondes faces de fixation (27) comprennent au moins un second élément mâle (29) et au moins un second élément femelle (30) qui peuvent être couplés à un second élément femelle (30) et un second élément mâle (29) respectivement des seconds composants modulaires (26) adjacents.

11. Machine (1) selon une ou plusieurs des revendications précédentes, **caractérisée par le fait que** ladite première tige de rétention (23) est coaxiale audit axe central (A) et montée de manière rotative sur lesdites plaques de côté (2).
